# EUROPEAN PATENT APPLICATION

(11) **EP 4 582 267 A1**
(43) Date of publication of application: **09.07.2025**
(21) Application number: 25150609.3
(22) Date of filing: 08.01.2025
(51) Int. Cl.: B60B 21/02, B60B 21/06, B60B 5/02, B60B 21/04

(54) **AERODYNAMICALLY OPTIMIZED BICYCLE WHEEL**

(30) Priority: 08.01.2024 US 202463618594 P; 12.12.2024 US 202418979092
(71) Applicant: SRAM, LLC., Chicago, IL 60607 (US)
(72) Inventor: HALL, Michael, COLORADO SPRINGS, 80907 (US); MORSE, David, Indianapolis, 46254 (US); TROUW, Ruan, Indianapolis, 46254 (US)
(74) Representative: Thum, Bernhard

(57) **Abstract**

A rim for a bicycle wheel includes a radially inner portion disposed along an inner circumference of the rim, a first sidewall, and a second sidewall spaced apart from the first sidewall. The first sidewall and the second sidewall extend radially outward from the radially inner portion. The rim also includes a radially outer tire engaging portion disposed along an outer circumference of the rim. The radially outer tire engaging portion extends from the first sidewall and the second sidewall, respectively. A maximum width of the rim is in a range between 30 mm and 70 mm, and the rim has an aspect ratio greater than 1.25 but less than 3.0.

## Description

### Background

This application claims the benefit of U.S. Provisional Patent Application 63/618,594, filed January 8, 2024, the contents of which are hereby incorporated by reference in its entirety.

### 1. Field of the Disclosure

The present disclosure is generally directed to a bicycle wheel, and more particularly, to an aerodynamically optimized bicycle wheel.

### 2. Description of Related Art

Road and gravel cyclists may use wide tires (e.g., greater than 34 mm wide) to improve overall vehicle efficiency traversing uneven and rough surfaces. These cyclists may ride at speeds at which aerodynamic drag becomes a significant slowing force (e.g., greater than 15 mph).

Conventional aerodynamic bicycle wheels use rim external widths between 25-35mm, where a chord length of the rim is significantly larger than a maximum external width. The purpose of this large aspect ratio is to allow airflow split by a leading edge of the wheel to recover as much pressure as possible on downstream surfaces, helping to balance a low pressure trailing edge of the wheel and high pressures near a leading edge flow stagnation point. This reduces a total aerodynamic drag of the wheel.

### 3. Summary

An example of a rim for a bicycle wheel. The rim comprises a radially inner portion disposed along an inner circumference of the rim, a first sidewall and a second sidewall spaced apart from the first sidewall. The first sidewall and the second sidewall extend radially outward from the radially inner portion. A radially outer tire engaging portion disposed along an outer circumference of the rim. The radially outer tire engaging portion extending from the first sidewall and the second sidewall, respectively. A maximum width of the rim is in a range between 30 mm and 70 mm and the rim has an aspect ratio greater than 1.25 but less than 3.0.

An example of a bicycle wheel for a bicycle. The wheel comprises a rim comprising a radially inner portion disposed along an inner circumference of the rim, a first sidewall, a second sidewall spaced apart from the first sidewall. The first sidewall and the second sidewall extend radially outward from the radially inner portion. A radially outer tire engaging portion is disposed along an outer circumference of the rim. The radially outer tire engaging portion extends from the first sidewall and the second sidewall, respectively. A tire that is greater than 34 mm wide when inflated is attachable to the rim such that when the tire is attached to the rim, a width of the tire is less than or equal to a maximum width of the rim. The maximum width of the rim is in a range between 30 mm and 70 mm, and the rim has an aspect ratio greater than 1.25 but less than 3.0.

### Brief Description of the Drawings

Objects, features, and advantages of the present invention will become apparent upon reading the following description in conjunction with the drawing figures, in which:
FIG. 1 is a side view schematic of a bicycle that may be constructed to utilize an aerodynamically optimized wheel;
FIG. 2 is a side view of a wheel for a bicycle, such as the bicycle of FIG. 1;
FIG. 3 is a perspective view of an embodiment of a rim of a wheel, such as the wheel of FIG. 2;
FIG. 4 is cross-section of the rim of FIG. 3;
FIG. 5 is a profile of a cross-section of the rim of FIG. 3 with a tire attached;
FIG. 6 is a profile of a cross-section of another rim of a wheel, such as the wheel of FIG. 2, with a tire attached; and
FIG. 7 is a flow chart of an embodiment of a method for manufacturing a rim.

### Detailed Description of the Disclosure

One of the largest improvements available to a bicycle with wide tires is to use an airfoil-shaped rim that both complements a tire width and has a large enough aspect ratio to recapture airflow split by a leading edge of the wheel to minimize low pressure pockets on aft surfaces of the wheel.

The Reynolds Number of a moving fluid partially dictates minimum airfoil aspect ratios that are effective at maintaining attached flow. Bicycles operate within Reynold Number flow regimes that allow rim aspect ratios as low as 1.25 to contribute significant aerodynamic benefits to a bicycle. Increasing the aspect ratio provides better aerodynamic performance but comes with higher manufacturing costs and weight for a given external width.

Rim aspect ratios above 3.0 provide diminished returns in aerodynamic improvements while significantly increasing manufacturing cost and rim weight. A large tire (e.g., greater than 34 mm wide) mounted to a conventionally-wide rim loses most aerodynamic benefit because the combined shape of a wide tire on a narrower rim does not approximate an airfoil cross-section and causes airflow separation while in use. This significantly increases an amount of aerodynamic drag, which has serious effects on energy required by the rider to maintain any given speed.

Larger tire sizes are typically paired with proportionally narrow rim beds, per industry convention and European Tyre and Rim Technical Organization (ETRTO) standards. These same rims may be designed with a shallow rim aspect ratio to prioritize low system weight over good aerodynamic performance. Tire bed widths that pair well aerodynamically with a large tire are typically considered undesirable because this combination requires a compromise in added weight of the system. Further, this combination would violate known ETRTO conventions.

Advances in manufacturing techniques and product development have allowed the production of wide tire bed widths that pair aerodynamically with wide tires, but do not suffer undesirable weight penalties compared to narrow tire bed widths. Also, advances in testing have shown that aerodynamic performance may be prioritized above weight savings in most use cases, if high average riding speeds are the desired effect.

The present disclosure provides examples of rims and wheels that solve or improve upon one or more of the above-noted and/or other disadvantages with wheels including a large tire (e.g., greater than 34 mm wide) mounted to a conventionally-wide rim (e.g., 25-35mm). The disclosed rims, for example, have a widest point that is between 36-70mm at a radial distance distal to mid-chord of a rim cross section, and have an aspect ratio greater than 1.25 but less than 3.0. The disclosed rims provide an aerodynamic benefit because the combined shape of the wide tire on the wider rim approximates an airfoil cross-section. The disclosed rims complement the tire width and have a large enough aspect ratio to recapture airflow split by a leading edge of the wheel to minimize low pressure pockets on aft surfaces of the wheel. This decreases the amount of aerodynamic drag compared to wheels including a large tire mounted to a conventionally-wide rim.

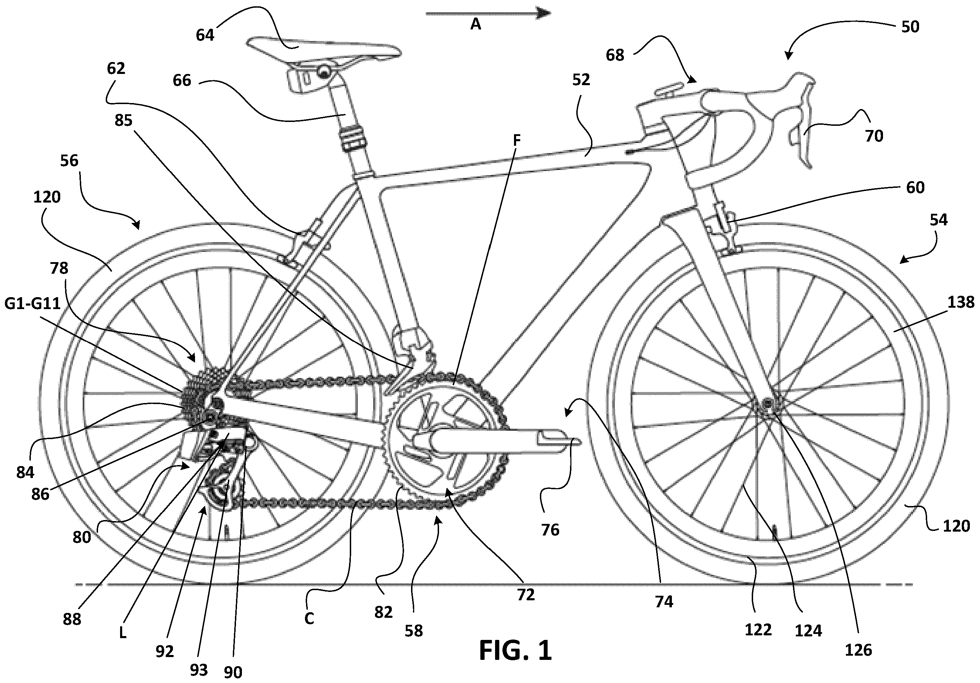

Turning now to the drawings, FIG. 1 generally illustrates a bicycle 50 that employs wheels constructed in accordance with the teachings of the present disclosure. The bicycle 50 includes a frame 52, a front wheel 54 and a rear wheel 56 each rotatably attached to the frame 52, and a drivetrain 58. A front brake 60 is provided for braking the front wheel 54, and a rear brake 62 is provided for braking the rear wheel 56. The bicycle 50 also generally has a seat 64 near a rear end of the frame 52 and carried on an end of a seat post 66 connected to the frame 52. The bicycle 50 also has handlebars 68 near a forward end of the frame 52. A brake lever 70 is carried on the handlebars 68 for actuating the front brake 60, the rear brake 62, or both the front brake 60 and the rear brake 62. If the brake lever 70 actuates only one of the front brake 60 and the rear brake 62, a second brake lever (not shown) may also be provided to actuate the other brake. A front and/or forward riding direction or orientation of the bicycle 50 is indicated by the direction of the arrow A in FIG. 1. As such, a forward direction for the bicycle 50 is indicated by the direction of arrow A. While the illustrated bicycle 50 depicted in FIG. 1 is a road bike having drop-style handlebars 68, the present disclosure may be applicable to bicycles of any type, including mountain bikes with full or partial suspensions.

The drivetrain 58 has a chain C and a front sprocket assembly 72, which is coaxially mounted with a crank assembly 74 having pedals 76. The drivetrain 58 also includes a rear sprocket assembly 78 coaxially mounted with the rear wheel 56 and a rear gear change mechanism, such as a rear derailleur 80.

As is illustrated in FIG. 1, the front sprocket assembly 72 may include one or more coaxially mounted chainrings, gears, or sprockets. In this example, the front sprocket assembly 72 has one sprocket F. The one sprocket F has teeth 82 around a respective circumference. As shown in FIG. 1, the rear sprocket assembly 78 may include a plurality of coaxially mounted gears, cogs, or sprockets G. Each sprocket G1-G11 also has teeth 84 arranged around a respective circumference. The number of teeth 84 on the rear sprockets G1-G11 may gradually decrease from the largest diameter rear sprocket G1 to the smallest diameter rear sprocket G11. Though not described in any detail herein, a front gear changer 85 may be operated to move from a first operating position to a second operating position to move the chain C between front sprockets F. Likewise, the rear derailleur 80 may be operable to move between different operating positions to switch the chain C to a selected one of the rear sprockets G1-G11. In an embodiment, the rear sprocket assembly 78 may have more or fewer sprockets G. For example, in an embodiment, the rear sprocket assembly 78 may have twelve or thirteen sprockets. Dimensions and configuration of the rear derailleur 80 may be modified to accommodate a specific implemented plurality of sprockets. For example, an angle and length of a linkage 88 and/or a configuration of a cage 92 of the rear derailleur 80 may be modified to accommodate specific sprocket combinations.

The rear derailleur 80 is depicted as a wireless, electrically actuated rear derailleur mounted or mountable to the frame 52, or frame attachment, of the bicycle 50. The electric rear derailleur 80 has a base member 86 (e.g., a b-knuckle) that is mounted to the bicycle frame 52. The linkage 88 has two links L that are pivotally connected to the base member 86 at a base member linkage connection portion. A movable member 90 (e.g., a p-knuckle) is connected to the linkage 88 at a moveable member linkage connection portion. The chain guide assembly 92 (e.g., a cage) is configured to engage and maintain tension in the chain C and has one or more cage plates 93 with a proximal end that is pivotally connected to a part of the movable member 90. The cage plate 93 may rotate or pivot about a cage rotation axis in a damping direction and a chain tensioning direction. Other gear changing systems, such as mechanically or hydraulically controlled and/or actuated systems may also be used.

A motor module may be carried on the electric rear derailleur 80 with a battery. The battery supplies power to the motor module. In one example, the motor module is located in the movable member 90. However, the motor module may instead be located elsewhere, such as in one of the links L of the linkage 88 or in the base member 86. The motor module may include a gear mechanism or transmission. As is known in the art, the motor module and gear mechanism may be coupled with the linkage 88 to laterally move the cage plate 93 and thus switch the chain C among the rear sprockets (e.g., G1-G11) on the rear sprocket assembly 78.

The cage plate 93 also has a distal end that carries a tensioner cog or wheel. The wheel also has teeth around a circumference. The cage plate 93 is biased in a chain tensioning direction to maintain tension in the chain C. The chain guide assembly 92 may also include a second cog or wheel, such as a guide wheel disposed nearer the proximal end of the cage plate 93 and the movable member 90. In operation, the chain C is routed around one of the rear sprockets (e.g., G1-G11). An upper segment of the chain C extends forward to the front sprocket assembly 72 and is routed around the one front sprocket F. A lower segment of the chain C returns from the front sprocket assembly 72 to the tensioner wheel and is then routed forward to the guide wheel. The guide wheel directs the chain C to the rear sprockets (e.g., G1-G11). Lateral movement of the cage plate 93, the tensioner wheel, and the guide wheel may determine the lateral position of the chain C for alignment with a selected one of the rear sprockets (e.g., G1-G11).

The bicycle 50 may include one or more bicycle control devices mounted to handlebars 68. The bicycle control devices may include one or more types of bicycle control and/or actuation systems. For example, the bicycle control devices may include brake actuation systems to control the front brake 60 and/or the rear brake 62, and/or gear shifting systems to control the drivetrain 58. Other control systems may also be included. For example, the system may be applied, in some embodiments, to a bicycle where only a front or only a rear gear changer is used. Also, the one or more bicycle control devices may also include suspension, seat post, and/or other control systems for the bicycle 50.

The front wheel 54 and/or the rear wheel 56 of the bicycle 50 may include a tire 120 attached to a radially outer tire engaging portion of a rim 122. The tire 120 may be any number of sizes. For example, the tire 120 may have a width that is greater than 34 mm.

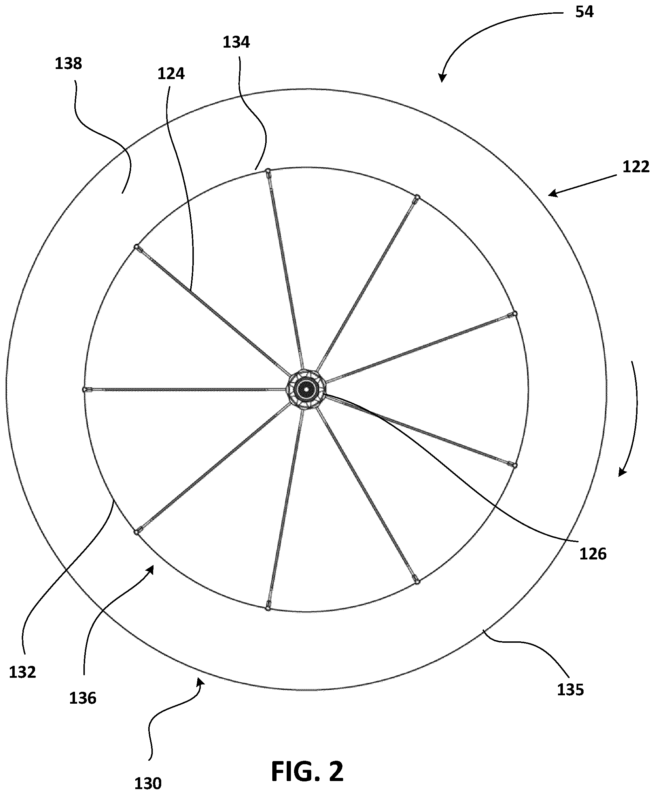

As shown in FIGS. 1 and 2, a plurality of spokes 124 are attached directly to the rim 122. Alternatively, the spokes 124 may be attached and/or secured to the rim 122 with other structural components. The spokes 124 extend from the rim 122 and attach to a central hub 126. The spokes 124 are maintained with a tension between the rim 122 and the central hub 126 to provide the respective wheel 54, 56 with an operational rigidity for use on the bicycle 50. The central hub 126 is configured for rotational attachment to the bicycle frame 52.

FIG. 2 illustrates a bicycle wheel having a rim 122, spokes 124, and a central hub 126, such as the front wheel 54 of FIG. 1, removed from the rest of the bicycle 50 and without a tire attached. The rim 122 includes a tire engaging portion 130 to engage with the tire 120, as is shown in FIG. 1. The tire engaging portion 130 is configured radially outward of a spoke receiving surface 132 that is disposed along an inner circumference 134 of the rim 122. In other words, the tire engaging portion 130 is a radially outer tire engaging portion. In an embodiment, the tire engaging portion 130 is disposed along an outer circumference 135 of the rim 122. The tire engaging portion 130 is configured for attachment to tires using clincher tire attachment configurations for tires including beaded interlock attachments. Other configurations of the tire engaging portion 130 may also be provided to allow for the use of other types of tires on the rim 122. For example, tubeless tires including beaded interlock attachment types may be used.

The rim 122 provides structure for attachment of the spokes 124 to the rim 122 at a receiving portion of the rim 122, proximate to the spoke receiving surface 132. As such, the spoke receiving surface 132 is part of a spoke engaging portion 136 (e.g., a radially inner portion) of the rim 122. In an embodiment, the spoke engaging portion 136 of the rim 122 is disposed along the inner circumference 134 of the rim 122. In another embodiment, the spoke receiving surface 132 and the spoke engaging portion 136 may be separate parts and/or portions of the rim 122. For example, the spokes 124 may pass through the spoke receiving surface 132, and the structure for attachment to the rim 122 may be provided proximate to the tire engaging portion 130.

The rim 122 includes a first sidewall 138 and a second sidewall that extend between the tire engaging portion 130 and the spoke engaging portion 136. For example, the first sidewall 138 and the second sidewall extend radially outward from the spoke engaging portion 136 to the tire engaging portion 130. The first sidewall 138 is spaced apart from the second sidewall.

The rim 122 may be made of any number of materials. For example, the rim 122 may be made of a metal (e.g., aluminum or an aluminum alloy). In one embodiment, at least part of the rim 122 (e.g., the spoke engaging portion 136 and/or the tire engaging portion 130) is formed by one or more composite materials. In one embodiment, the entire rim 122 is formed by two or more composite materials. Other configurations may also be provided. For example, a combination of a first composite material (e.g., natural fiber reinforced plastic or fiberglass reinforced plastic) and a second composite material (e.g., carbon-fiber reinforced plastic) forms a one-piece unitary rim of a collection of layers of the first composite material (e.g., fiberglass fiber layers) and layers of the second composite material (e.g., carbon-fiber layers) including the tire engaging portion 130, the first sidewall 138, the second sidewall, and the spoke engaging portion 136.

The front wheel 54 and the rear wheel 56 may include rims 122 configured for any size wheel. In an embodiment, the rims 122 are configured for use in wheels conforming to a 700C (e.g., a 622 millimeter diameter clincher and/or International Standards Organization 622mm) bicycle wheel standard.

The front wheel 54 and the rear wheel 56 may rotate about the central hub 126 in either direction. For example, as shown in FIG. 2, the front wheel 54 and the rear wheel 56 may be configured to rotate in a particular rotational direction about the central hub 126. In another example, the front wheel 54 and the rear wheel 56 may be configured to rotate in a direction opposite the particular rotational direction.

In one embodiment, the first sidewall 138, the second sidewall, the spoke engaging portion 136, and the tire engaging portion 130 of the front wheel 54 and/or the rear wheel 56 of the bicycle 50 (e.g., the front wheel 54 and the rear wheel 56 in the example of FIG. 1) are at least partially formed by one or more layers of the one or more composite materials (e.g., layers of composite materials). Each of the one or more layers may include one or more fabric plies (e.g., pieces) of the respective composite material. Different layers of different composite materials may include different numbers of plies or pieces of the composite materials, respectively. At least some of the layers of composite material may be of different shapes and/or sizes. Alternatively, all of the layers of the composite material may be a same shape and/or size.

In one embodiment, at least some of the layers of composite material are shaped as strips. For example, strips of the one or more composite materials may form the first sidewall 138 and the second sidewall of the front wheel 54. The strips of the one or more composite materials may be disposed about the central hub 126 of the front wheel 54, respectively, and the central hub 126 of the rear wheel 56, respectively, to form the first sidewall 138 and the second sidewall of the front wheel 54 and the rear wheel 56, respectively.

In a manufacturing process, the layers of the front wheel 54 and the rear wheel 56, respectively, are integrated with the spoke engaging portion 136 and the tire engaging portion 130 (e.g., layers of composite material forming the spoke engaging portion 136 and the tire engaging portion 130) of the respective wheel 54, 56 by, for example, a curing process, such that a one-piece unitary rim 122 is formed. The rims 122 of the front wheel 54 and rear wheel 56, respectively, may be formed with other manufacturing processes.

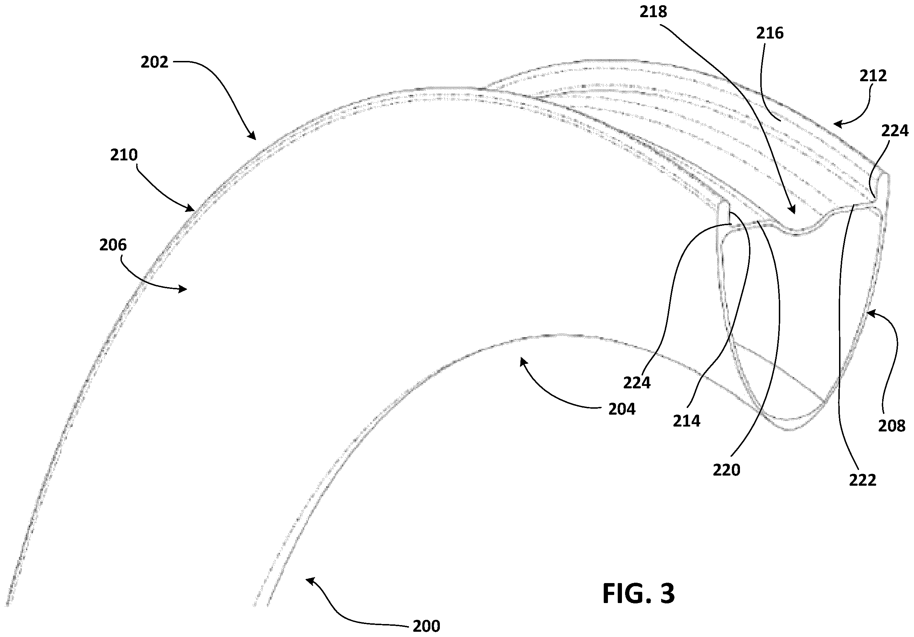

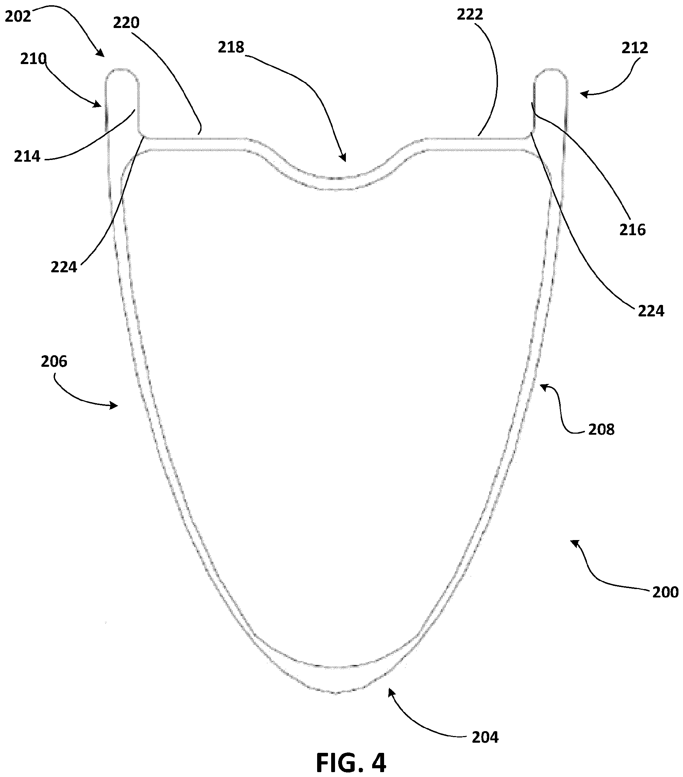

FIGS. 3 and 4 show a first embodiment of a rim 200 that is aerodynamically optimized for wide tires (e.g., having a width greater than 34 mm when inflated to operating pressures). In one embodiment, a layup pattern of layers of composite material for the rim is provided prior to a curing process, for example, to form the rim 200. The layers of composite materials, after the curing process, may be part of a one-piece unitary rim 200. The resultant one-piece unitary rim 200 may be formed by a composite laminate that includes one or more compressed layers of one or more composite materials. In another embodiment, additionally or alternatively, the rim 200 is at least partially made of a metal such as, for example, aluminum or an aluminum alloy. In other embodiments, the rim 200 may be made of different, additional, and/or fewer materials.

Any number of composite materials may be included within the composite laminate. For example, the one or more composite materials of the composite laminate may include a first composite material, a second composite material, a third composite material, or any combination thereof. The composite laminate may include more or fewer composite materials. For example, the composite laminate may include only the first composite material and the second composite material, or may include only the second composite material and the third composite material. In one embodiment, the composite laminate includes only the first composite material, only the second composite material, or only the third composite material.

The first composite material may include a matrix of a polymer-based material (e.g., a first polymer-based material) and fibers of a reinforcing material (e.g., a first reinforcing material). The first polymer-based material may be any number of materials including, for example, a plastic, an acrylic, a resin, an epoxy, or any combination thereof, and the fibers of the second reinforcing material may be any number of materials including, for example, carbon. Other polymer-based materials and/or other reinforcing fibers may be used.

The second composite material may include a matrix of a polymer-based material (e.g., a second polymer-based material) and fibers of a reinforcing material (e.g., a second reinforcing material). The second polymer-based material may be any number of materials including, for example, a plastic, an acrylic, a resin, an epoxy, or any combination thereof, and the fibers of the second reinforcing material may be any number of materials including, for example, fiberglass. Other polymer-based materials and/or other reinforcing fibers may be used.

The third composite material may include a matrix of a polymer-based material (e.g., a third polymer-based material) and fibers of a reinforcing material (e.g., a third reinforcing material). The third polymer-based material may be any number of materials including, for example, a plastic, an acrylic, a resin, an epoxy, or any combination thereof, and the fibers of the third reinforcing material may be any number of materials including, for example, natural fibers. For example, the fibers of the third reinforcing material may be flax fibers, kenaf fibers, hemp fibers, jute fibers, or sisal fibers. Other polymer-based materials and/or other reinforcing fibers may be used.

The rim 200 includes a radially outer tire engaging portion 202 (e.g., disposed along an outer circumference of the rim 200), a radially inner portion 204 (e.g., a spoke engaging portion), a first sidewall 206, and a second sidewall 208 spaced apart from the first sidewall 206. The first sidewall 206 and the second sidewall 208 extend radially outward from the radially inner portion 204, to the radially outer tire engaging portion 202. The radially outer tire engaging portion 202 extends from the first sidewall 206 and the second sidewall 208, respectively.

The radially outer tire engaging portion 202 of the rim 200 includes a first tire retaining portion 210 and a second tire retaining portion 212 spaced apart from the first tire retaining portion 210. The first tire retaining portion 210 extends from the first sidewall 206, and the second tire retaining portion 212 extends from the second sidewall 208.

The first tire retaining portion 210 includes a first tire retaining wall 214. In one embodiment, the first tire retaining portion 210 also includes a first protrusion (e.g., a first tire retaining feature) (not shown). The first protrusion may extend away from the first tire retaining wall 214. The first protrusion may be any number of shapes including, for example, a shape having a cross-section that is rectangular with a semi-circle cap. The first protrusion may extend circumferentially around the rim 200.

The second tire retaining portion 212 includes a second tire retaining wall 216. The second tire retaining wall 216 is opposite and spaced apart from the first tire retaining wall 214. In one embodiment, the second tire retaining portion 212 also includes a second protrusion (e.g., a second tire retaining feature) (not shown). The second protrusion may extend away from the second tire retaining wall 216, towards the first tire retaining portion 210. The second protrusion may be any number of shapes including, for example, a shape having a cross-section that is rectangular with a semi-circle cap. The second protrusion may extend circumferentially around the rim 200. The first protrusion and the second protrusion may be other shapes.

The rim 200 may seat a tire 120 (see FIG. 1) that is, for example, a tubeless clincher tire. The tire 120 includes beads that interact with the radially outer tire engaging portion 202 (e.g., the first tire retaining portion 210 and the second tire retaining portion 212) of the rim 200 to attach the tire 120 to and maintain the tire 120 on the rim 200. The beads may include any number of materials within the beads, such as, for example, a steel wire or aramid (e.g., Kevlar^{™}) fiber, to prevent the tire 120 from moving off of the rim 200. Due to the reinforcement with the steel wire or the Kevlar^{™} fiber, for example, the beads resist stretching from internal air pressure. Alternatively, the beads may be made of a same material as the tire 120 (e.g., rubber).

The radially outer tire engaging portion 202 also includes a well 218 positioned between the first tire retaining portion 210 and the second tire retaining portion 212 of the rim 200. The well 218 provides a volume into which the beads of the tire 120 may be placed when the tire 120 is being attached to the rim 200. As the tire 120 is inflated, the beads of the tire 120 move away from each other until the beads interact with the first tire retaining portion 210 and the second tire retaining portion 212, respectively. When inflated, the beads of the tire 120 abut the first tire retaining wall 214 and the second tire retaining wall 216, respectively. In one embodiment, the first tire retaining feature and the second tire retaining feature, for example, keep the beads of the tire 120 positioned within the radially outer tire engaging portion 202 (e.g., keep the beads of the tire 120 engaged with the first tire retaining wall 214 and the second tire retaining wall 216) and thus keep the tire 120 from blowing off the rim 200. The contact between the beads and the first tire retaining wall 214 and the second tire retaining wall 216, respectively, forms a seal between the inflated tire 120 and the rim 200.

The radially outer tire engaging portion 202 may also include ridges (e.g., bead bumps; a first bead bump and a second bead bump) on opposite sides of the well 218, respectively. A first shelf 220 (e.g., a first bead shelf) extends away from the first tire retaining wall 214 (e.g., between the first tire retaining wall 214 and the first bead bump), and a second shelf 222 (e.g., a second bead shelf) extends away from the second tire retaining wall 216 (e.g., between the second tire retaining wall 216 and the second bead bump). In one embodiment, curved transition regions 224 extend between the first shelf 220 and the first tire retaining wall 214, and the second shelf 222 and the second tire retaining wall 216, respectively. The bead bumps may be positioned on opposite sides of the well 218, respectively, and may be raised relative to the first shelf 220 and the second shelf 222, respectively. The bead bumps may help retain the tire 120 on the rim 200 if the tire 120 loses pressure.

In one embodiment, layers of the one or more composite materials (e.g., the first composite material, the second composite material, and/or the third composite material) are shaped as strips. A strip of a composite material (e.g., the first composite material) of the one or more composite materials may include fibers that extend along a finite length of the strip. In one embodiment, the fibers extend in a primary strength direction of the strip (e.g., along the length of the strip). For example, the strip has unidirectional fiber orientation along the length of the strip. In another embodiment, some of the fibers do not extend in the primary strength direction (e.g., less than 20 percent of the fibers, less than 10 percent of the fibers, or less than 5 percent of the fibers).

The strip may be any number of shapes and/or sizes. For example, the strip is rectangular in shape. Other shapes such as, for example, square shaped strips and non-rectangular parallelogram shaped strips, may be provided. The strip also includes a width that is perpendicular to the length of the strip. The length of the strip may be defined by a size of, for example, the radially outer tire engaging portion 202, the first sidewall 206, the second sidewall 208, and/or the radially inner portion 204 of the rim 200. In other words, the length of the strip may be at least as tall or wide as the radially outer tire engaging portion 202, the first sidewall 206, the second sidewall 208, and/or the radially inner portion 204 of the rim 200. In one embodiment, the width of the strip is between 10 mm and 50 mm. For example, the width of the strip is 30 mm. In other embodiments, the strip is wider or narrower (e.g., 60 mm). Smaller strip widths better optimize fiber orientation but come with a cost of added manufacturing complexity. In one embodiment, the width of the strip is as wide as a radial width of the rim 200.

Layers of different shapes, greater width, and/or greater length may be used. For example, at least some of the layers of the first composite material, for example, may extend a quarter, half, or all the way around the rim 200. Different sized and/or shaped layers of the first composite material, for example, may be used depending on the application within the rim (e.g., forming an outer surface, providing strength and stiffness at a high load location within the rim).

The layers of the one or more composite materials may have any number of thicknesses. For example, thicknesses of the layers of the one or more composite materials may be 0.4 mm or thinner (e.g., 0.25 mm or thinner). Other thicknesses of the layers of the one or more composite materials may be provided.

For example, for one or more parts of the rim 200, each of a number of plies of a composite material of the one or more composite materials (e.g., the second composite material) may be unidirectional. The number of plies of the composite material may be stacked and sewn together, such that a checkered or hash pattern within a layer is formed. In other words, at least some of the number of plies of the composite material are unidirectional in different directions, respectively. The thickness of such a layer may be 1.2 mm or thicker. Other thicknesses may be provided.

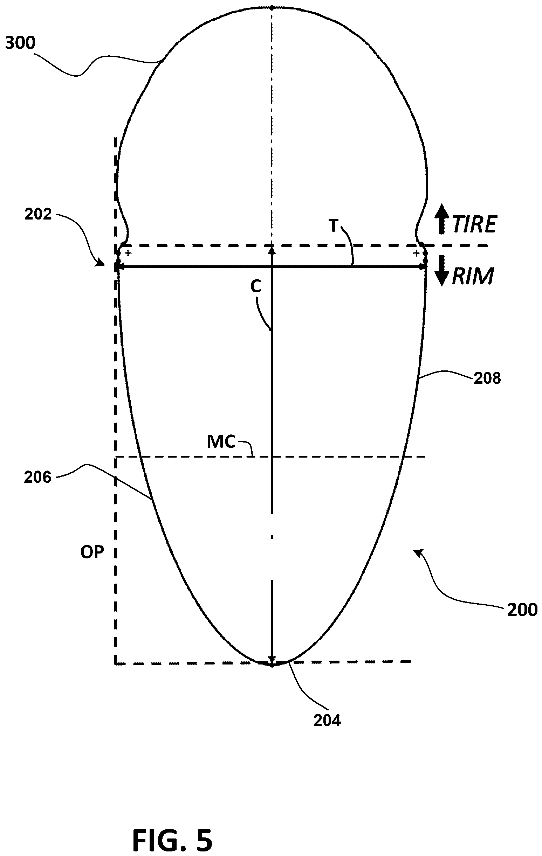

The rim 200 may be any number of shapes and sizes. For example, the rim 200 may be shaped, such that when a tire is attached to the rim 200, a cross-section through the rim 200 and the tire is airfoil-shaped. Referring to FIG. 5, the rim 200 has a thickness T and a chord length C. The thickness T is at a widest part of the rim 200. In other words, the thickness T may be a maximum width of the rim 200 (e.g., within the cross-section through the rim 200 shown in FIG. 5). The chord length C is a distance from the leading edge to the trailing edge of the rim 200 (e.g., partially forming the airfoil shape). In other words, the chord length C may be a maximum height of the rim 200 (e.g., within the cross-section through the rim 200 shown in FIG. 5).

The rim 200 may have a thickness T that is between 36-70 mm. In other embodiments, other thicknesses T of the rim 200 may be provided. For example, the rim 200 may have a thickness T that is between 30-70 mm.

FIG. 5 illustrates mid-chord MC of the cross-section of the rim 200 (e.g., at the middle of the chord length C). The thickness T is at a radial distance that is distal to mid-chord MC of the cross-section of the rim 200. In other words, the thickest part of the rim 200 (e.g., the widest part within the cross-section of the rim 200) is between mid-chord MC of the cross-section of the rim 200 and the radially outer tire engaging portion 202 of the rim 200. In one embodiment, the thickness T is at a radially outermost part of the rim 200. The rim 200 may have an aspect ratio, which is defined by the chord length C divided by the thickness T, greater than 1.25 but less than 3.0.

In the example of FIG. 5, the rim 200 has a thickness T of 40 mm and a chord length C of 54 mm, which results in an aspect ratio of 1.35. FIG. 5 also shows a 40 mm wide tire 300 attached to the rim 200. Other rim sizes and tire sizes may be provided. For example, the rim 200 may have a thickness T of 50 mm and a chord length C of 67 mm, which results in an aspect ratio of 1.34, and a 50 mm wide tire 300 may be attached to the rim 200. Other combinations may be provided.

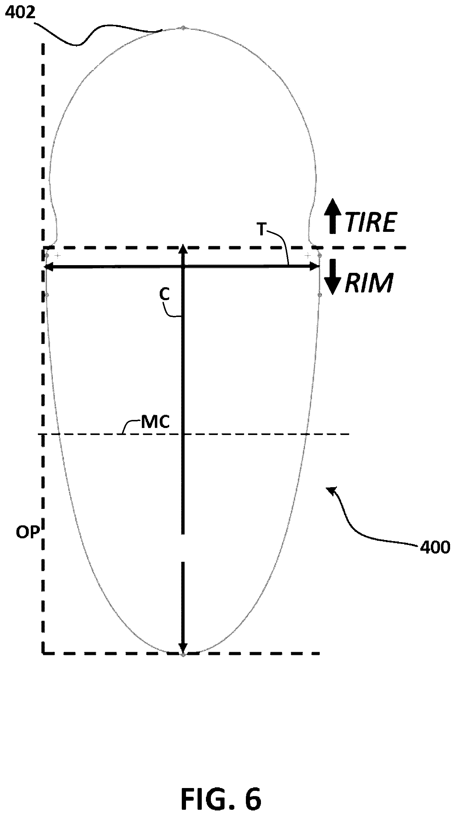

The rim 200 shown in FIGS. 3-5 is an aerodynamic rim 200 optimized for a larger tire 300 (e.g., having a tire width of 40 mm). For comparison, FIG. 6 illustrates an aerodynamic rim 400 that is optimized for a smaller tire 402. For example, the rim 400 may have a thickness T of 30 mm and a chord length C of 45 mm, which results in an aspect ratio of 1.5. FIG. 6 shows a 28 mm wide tire 402 attached to the rim 400.

The shape of the profile shown in FIG. 6 is similar to the shape of the profile shown in FIG. 5. Unlike with a large tire (e.g., greater than 34 mm wide) mounted to a conventionally-wide rim (e.g., 25-35mm) both the profile of FIG. 5 and the profile of FIG. 6 (e.g., combined shapes of tires on rims) approximate an airfoil cross-section and recapture airflow split by a leading edge of the respective wheel to minimize low pressure pockets on aft surfaces of the respective wheel.

Referring to FIG. 5, the thickness T of the rim 200 may approximately correspond to the width (e.g., a maximum width) of the tire 300 (e.g., within 5 mm when the tire 300 is inflated). FIG. 5 shows an axially outermost plane OP. The axially outermost plane OP is tangent to the profile of the rim 200 at the point at which the thickness T (e.g., the maximum width of the rim 200) is located. The axially outermost plane OP is parallel to the chord length C. As shown in FIG. 5, the inflated tire 300 does not extend beyond the axially outermost plane OP defined by the rim 200, such that the profile of FIG. 5 approximates an airfoil cross-section. In one embodiment, the thickness T of the rim 200 (e.g., the maximum width of the rim 200) is located at a radially outermost part of the rim 200, and the axially outermost plane OP is tangent to the profile of the rim 200 at the radially outermost part of the rim 200. In other words, the rim 200 is wider or as wide as a width of the inflated tire 300 at a connection of the inflated tire 300 to the rim 200.

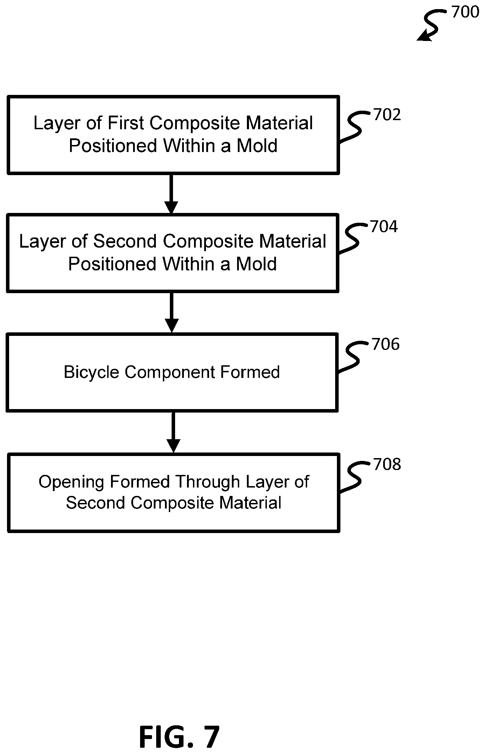

FIG. 7 illustrates a method 700 for manufacturing a bicycle component (e.g., the rim 122) of a bicycle (e.g., the bicycle 50). The acts of the method 700 presented below are intended to be illustrative. In some embodiments, the method 700 may be accomplished with one or more additional acts not described, and/or without one or more of the acts described. Additionally, the order in which the acts of the method 700 are illustrated in FIG. 7 and described below is not intended to be limiting.

In act 702, at least one layer (e.g., a layer) of a first composite material is positioned within a mold. The first composite material includes a matrix of a first polymer-based material and fibers of a first reinforcing material. In one embodiment, fiber orientation of the fibers of the first reinforcing material of the layer of the first composite material is unidirectional in a direction along a length of the respective layer.

The layer of the first composite material may be any number of shapes and/or sizes. For example, the layer of the first composite material may be rectangular in shape and may have a width at least as large as a height of a sidewall of a rim to be manufactured. Other shapes and/or sizes may be provided.

The first polymer-based material may be or include any number of polymer-based materials including, for example, a thermoplastic, a thermoset matrix, or a combination thereof. The fibers of the first reinforcing material may be or include any number of different types of fibers including, for example, carbon fibers, fiberglass fibers, flax fibers, kenaf fibers, hemp fibers, jute fibers, sisal fibers, or any combination thereof. Other polymer-based materials and/or other reinforcing materials may be used for the first composite material.

In one embodiment, the layer of the first composite material is positioned within the mold, such that the layer of the first composite material forms at least part of one of two sidewalls of the rim to be manufactured. In other embodiments, the layer of the first composite material is positioned within the mold, such that the layer of the first composite material forms at least part of another portion of the rim to be manufactured (e.g., a radially inner portion of the rim to be manufactured).

In act 704, at least one layer (e.g., a layer) of a second composite material is positioned within the mold, such that the layer of the second composite material abuts and/or overlaps with the layer of the first composite material. The second composite material includes a matrix of a second polymer-based material and fibers of a second reinforcing material. The second polymer-based material may be the same or different than the first polymer-based material, and/or the second reinforcing material may be the same or different than the first reinforcing material.

The second polymer-based material may be or include any number of polymer-based materials including, for example, a plastic, an acrylic, a resin, an epoxy, or any combination thereof. The fibers of the second reinforcing material may be or include any number of different types of fibers including, for example, carbon fibers, fiberglass fibers, flax fibers, kenaf fibers, hemp fibers, jute fibers, sisal fibers, or any combination thereof. Other polymer-based materials and/or other reinforcing materials may be used for the second composite material.

The layer of the second composite material may be any number of shapes and/or sizes. For example, the layer of the second composite material may be rectangular in shape and may have a width at least as large as a width of the radially inner portion of a rim to be manufactured. Other shapes and/or sizes may be provided. In one embodiment, the layer of the second composite material is thicker than the layer of the first composite material. In another embodiment, the layer of the second composite material is thinner than the layer of the first composite material.

In one embodiment, the layer of the second composite material is positioned within the mold, such that the layer of the second composite material forms at least part of the radially inner portion of the rim to be manufactured. In other embodiments, the layer of the second composite material is positioned within the mold, such that the layer of the second composite material forms at least part of another portion of the rim to be manufactured (e.g., a radially outer tire engaging portion).

Acts 702 and 704 may be repeated any number of times to form a layup pattern for the bicycle component. In one embodiment, acts 702 and 704 may be repeated with one or more additional acts, in which one or more layers of other composite materials are positioned any number of times to, for example, form a layup pattern.

In one embodiment, act 702 is repeated, and another layer of the first composite material is positioned within the mold, such that the other layer of the first composite material forms at least part of the other of the two sidewalls of the rim to be manufactured. Act 704 is also repeated, and another layer of the second composite material is positioned within the mold, such that the other layer of the second composite material forms at least part of the radially outer tire engaging portion of the rim to be manufactured. Acts 702 and 704 may be repeated around the inner circumference and/or the outer circumference of the rim to be manufactured, for example, to form a layup pattern.

In act 706, the bicycle component is formed. Forming the bicycle component includes forming a composite laminate (e.g., lamination) that includes at least the layer of the first composite material and the layer of the second composite material within the mold. In one embodiment, forming the bicycle component includes forming the composite laminate that includes at least the layer of the first composite material, the layer of the second composite material, and a layer of a third composite material (e.g., the same or different than the first composite material and/or the second composite material) within the mold.

The mold may be used to form all or part of the bicycle component. For example, for a rim, the mold may be broken up into multiple parts to allow access to the mold when positioning at least the layer of the first material in act 702 and the layer of the second material in act 704. For example, the mold may be broken up into multiple circumferential portions (e.g., four circumferential portions) and/or multiple pieces (e.g., a first sidewall piece, a second sidewall piece, and a radially outer piece).

The mold may have any number of shapes and/or sizes. For example, the mold may be shaped and sized, such that the rim, after forming the composite laminate, has a thickness of 40 mm and a chord length of 54 mm, which results in an aspect ratio of 1.35. Other shapes and/or sizes of the mold may be provided.

Forming the composite laminate may include shaping and curing the composite laminate within, for example, the mold. For example, at least the layer of the first composite material and the layer of the second composite material may be positioned within the mold and shaped using a bladder inflated within the mold. The composite laminate may be shaped in other ways.

Once shaped, the composite laminate may be cured in any number of ways including, for example, by press curing, autoclave curing, or oven curing the composite laminate that includes at least the layer of the first composite material and the layer of the second composite material. Other types of curing may be used.

In act 708, an opening is formed through the formed composite laminate (e.g., the radially inner portion of the radially outer tire engaging portion). For example, the opening is formed through the layer of the second composite material of the composite laminate, such that the second composite material surrounds the opening.

The opening may be formed through the layer of the second composite material of the composite laminate in any number of ways including, for example, by drilling the opening through the layer of the second composite material. The opening may be formed through the layer of the second composite material in any number of other ways. For example, the opening may be formed through the layer of the second composite material by cutting the opening out of the layer of the second composite material. The opening may be any number of different types of openings including, for example, a spoke hole, a valve hole, an access hole, or another type of opening.

Act 708 may be repeated any number of times. For example, act 708 may be repeated for the other layer of the second composite material (e.g., as another valve hole or an access hole) and any other layers of the second composite material through which an opening is to extend (e.g., for spoke holes or access holes).

In one embodiment, in which the layer of the second composite material extends all the way around the composite laminate of the rim to form at least part of the radially inner portion of the rim or the radially outer tire engaging portion of the rim, act 708 may be repeated any number of times (e.g., 34 or 36 times), such that a plurality of openings (e.g., spoke holes or access holes) are formed through the layer of the second composite material.

The plurality of openings may be formed through the layer of the second composite material in any number of configurations. For example, the plurality of openings may be formed through the layer of the second composite material, such that the plurality of openings are distributed uniformly around the rim (e.g., around the radially inner portion of the rim). Other configurations of the plurality of openings may be provided.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A rim for a bicycle wheel, the rim comprising:
a radially inner portion disposed along an inner circumference of the rim;
a first sidewall;
a second sidewall spaced apart from the first sidewall, wherein the first sidewall and the second sidewall extend radially outward from the radially inner portion; and
a radially outer tire engaging portion disposed along an outer circumference of the rim, the radially outer tire engaging portion extending from the first sidewall and the second sidewall, respectively,
wherein a maximum width of the rim is in a range between 30 mm and 70 mm, and the rim has an aspect ratio greater than 1.25 but less than 3.0.

2. The rim of claim 1, wherein the rim comprises a chord length extending between a leading edge and a trailing edge of the rim, the maximum width of the rim being at a radial distance that is distal to a mid-chord of a cross section of the rim.

3. The rim of claim 2, wherein the maximum width of the rim is between the mid-chord and the radially outer tire engaging portion.

4. The rim of one of the preceding claims, wherein the maximum width of the rim is located at a radially outermost portion of the rim.

5. The rim of claim one of the preceding claims, wherein the rim comprises a chord length extending between a leading edge and a trailing edge of the rim, the maximum width of the rim being equal to 40 mm and the chord length equals 54 mm, the aspect ratio being equal to 1.35.

6. The rim of claim one of the preceding claims, wherein the rim comprises a chord length extending between a leading edge and a trailing edge of the rim, the maximum width of the rim being equal to 30 mm and the chord length equals to 45 mm, the aspect ratio being equal to 1.5.

7. The rim of claim one of the preceding claims, wherein the maximum width is located where an axially outermost plane is tangent to one of the first and second sidewalls of the rim.

8. The rim of claim one of the preceding claims, wherein the rim is made of a carbon fiber composite material.

9. A wheel for a bicycle, the wheel comprising:
a rim comprising:
a radially inner portion disposed along an inner circumference of the rim;
a first sidewall;
a second sidewall spaced apart from the first sidewall, wherein the first sidewall and the second sidewall extend radially outward from the radially inner portion; and
a radially outer tire engaging portion disposed along an outer circumference of the rim, the radially outer tire engaging portion extending from the first sidewall and the second sidewall, respectively,
wherein a tire that is greater than 34 mm wide when inflated is attachable to the rim, such that when the tire is attached to the rim, a width of the tire is less than or equal to a maximum width of the rim, wherein the maximum width of the rim is in a range between 30 mm and 70 mm, and the rim has an aspect ratio greater than 1.25 but less than 3.0.

10. The wheel of claim 9, wherein the rim comprises a chord length extending between a leading edge and a trailing edge of the rim, the maximum width of the rim being at a radial distance that is distal to a mid-chord of a cross section of the rim.

11. The wheel of claim 10, wherein the maximum width of the rim is between the mid-chord and the radially outer tire engaging portion,
and/or wherein the maximum width of the rim is located at a radially outermost portion of the rim.

12. The wheel of one of claims 9 to 11, wherein the rim comprises a chord length extending between a leading edge and a trailing edge of the rim, the maximum width of the rim being equal to 40 mm and the chord length equals 54 mm, the aspect ratio being equal to 1.35.

13. The wheel of one of claims 9 to 12, wherein the rim comprises a chord length extending between a leading edge and a trailing edge of the rim, the maximum width of the rim being equal to 30 mm and the chord length equals to 45 mm, the aspect ratio being equal to 1.5.

14. The wheel of one of claims 9 to 13, wherein the maximum width is located where an axially outermost plane is tangent to one of the first and second sidewalls of the rim.

15. The wheel of one of claims 9 to 14, wherein the rim is made of a carbon fiber composite material.
